(19) Europäisches Patentamt
European Patent Office
Office européen des brevets

(11) **EP 3 382 063 A2**

(12) **EUROPEAN PATENT APPLICATION**

(43) Date of publication:
**03.10.2018 Bulletin 2018/40**

(51) Int Cl.:
**C25D 5/18** *(2006.01)*    **C25D 7/00** *(2006.01)*
**C25D 17/00** *(2006.01)*    **C25D 17/10** *(2006.01)*
**C25D 21/02** *(2006.01)*    **G01N 21/552** *(2014.01)*

(21) Application number: **18165322.1**

(22) Date of filing: **30.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 PL 42107217**

(71) Applicant: **Instytut Chemii Fizycznej Polskiej Akademii Nauk
01-224 Warszawa (PL)**

(72) Inventors:
• **Ksiezopolska-Gocalska, Monika
01-424 Warsaw (PL)**
• **Albrycht, Pawel
00-130 Warszawa (PL)**
• **Rozniecka, Ewa
05-870 Blonie (PL)**
• **Podrazka, Marta
00-407 Warszawa (PL)**
• **Holyst, Robert
02-703 Warszawa (PL)**
• **Niedziótka-Jönsson, Joanna
00-710 Warsaw (PL)**

(74) Representative: **AOMB Polska Sp. z.o.o.
Ul. Emilii Plater 53
21st Floor
00-113 Warsaw (PL)**

(54) **A METHOD OF DEPOSITING METAL NANOPARTICLES ON A SURFACE IN AN ELECTROCHEMICAL PROCESS, THE SURFACE OBTAINED BY THIS METHOD AND ITS APPLICATION**

(57) The subject of the invention is a method of depositing metal nanoparticles on a surface in an electrochemical process using a working, reference and auxiliary electrode, in which the surface constitutes a working electrode and is at least partially immersed in an aqueous solution containing metal ions, forming an electrolyte solution, the nanoparticles are deposited on the surface of the working electrode under the influence of time-varying electric potential, and before the electrochemical process commences the electrolyte solution is heated to a temperature in the range of 5°C to 80°C, characterized in that the working electrode is set at an angle of 45° to 110° in relation to the auxiliary electrode, the applied electric potential is variable in time in a step-wise manner and that the active surface on the working electrode is limited.

The invention also includes the surface obtained by this method and its use.

Fig. 2a

**(Cont. next page)**

| | tilt | det | HV | mag | | HFW | 1 µm |
|---|---|---|---|---|---|---|---|
| | 45 ° | TLD | 5.00 kV | 25 000 x | | 5.08 µm | IPC PAS |

**Fig. 2b**

| | tilt | det | HV | mag | | HFW | 400 nm |
|---|---|---|---|---|---|---|---|
| | 45 ° | TLD | 5.00 kV | 100 000 x | | 1.27 µm | IPC PAS |

**Fig. 2c**

## Description

The subject of the invention is a method for depositing metal nanoparticles on a surface in an electrochemical process in which said surface constitutes a working electrode and is at least partially immersed in an aqueous solution of a metal salt forming an electrolyte solution, and said nanoparticles are deposited on said surface under the influence of an applied electric potential. The subject of the invention is also the surface obtained by this method and its use as a platform for Surface Enhanced Raman Scattering (SERS) or Localized Surface Plasmon Resonance (LSPR) studies.

Surface Enhanced Raman Spectroscopy (SERS), discovered in 1974 [1] is a fast, easy, non-destructive and selective method of qualitative analysis of samples. It consists of measuring the intensity of ultraviolet, visible and near infrared light, scattered inelastically on analyte particles adsorbed on the surface of a substrate. The result of the measurement is a spectrum, which is the so-called "fingerprint" of the test compound. It transpires that by using substrates with a metallic, nanoscale-roughened surface, the enhancement of intensity of effective Raman scattering can be increased by several orders of magnitude ($10^2$-$10^6$, and even for certain systems $10^8$-$10^{15}$) [2] [3]. This effect is very desirable, since substances from low concentration solutions can be measured, which is important, for example, in forensics or medicine, nevertheless the SERS technique is used in many other fields of science and industry.

The enhancement of the SERS signal depends on many factors, including: the chemical origin of the molecule, the frequency of the exciting radiation, the Raman effective cross-section, and in particular the type of substrate and the degree of surface roughness, although to this day, the mechanism of enhancement in the SERS technique has not yet been finally explained. It is most often described by two mechanisms: electromagnetic (dominant) - based on a plasmonic surface effect, and chemical - involving the transfer of charge within the metal surface and the adsorbed molecule on it.

For both mechanisms, what is most important is the correct surface of the substrate, and especially the degere of its roughening, because the irregularities occurring on it particularly affect the effect of enhancement of the Raman signal. The most suitable metals for forming SERS substrates are silver, gold and copper, with the best results being obtained for silver. These metals, especially silver and gold, show great stability and their LSPR (Localized Surface Plasmon Resonance) signals occur in the wavelength range of visible and near-infrared radiation [4], in which Raman scattering signals are observed.

The main features that SERS substrates should possess are:

• Reproducibility,
• A high enhancement factor,

• Uniformity of signal intensity over the entire surface,
• Stability in time,
• Universality for a broad group of compounds.

There are a number of methods by which substrates with the required surface parameters are obtained, for the analysis of specific compounds or groups of compounds, e.g.:

• electrochemical, where there is modification of the electrodes, which are already substrates, in specific oxidation-reduction cycles (ORC),
• chemical digestion, using light or temperature changes,
• deposition of metal colloids, sputter-coating thin metal layers on various surfaces, e.g. silicon, glass, ITO,
• the creation of matrices using lithography, e.g. polymer, with regular unevenness.

Despite the huge number of scientific publications and patents describing methods for obtaining SERS substrates, no good method has so far been proposed for the production of substrates that meet all the above conditions, especially the reproducibility of the intensity of Raman signals collected from the entire surface, as well as the reproducibility of the substrates obtained in successive series, suitable for a wide group of analytes.

Initially, as presented in paper [5], in order to obtain active surfaces for surface-enhanced Raman measurements, a two-pulse method was used for the electrodeposition of silver and gold nanoparticles on the surface of ITO and glassy carbon. Apart from silver nitrate, the electrolyte contained potassium and cyanide ions and spectroscopic analysis of the obtained substrates showed that the signal enhancement effect comes from local surface effects in which the main part is played by agglomerates of nanoparticles.

Publication [6] presents a method of two-pulse electrodeposition of silver nanoparticles of specified sizes and packing densities on glass surfaces coated with a conductive oxide - ITO, and shows the use of these substrates as SERS platforms, but the process is relatively long (it lasts over 1 hour). In addition, despite the statement about reproducibility, no data confirming this was included, e.g. from an example series of a dozen or so substrates produced in this way, and uniformity of the signals was indicated in only 6 random places from 1 sample in the given conditions.

Publication [7] describes an electrochemical method of applying silver nanoparticles, thanks to which it is possible to obtain reproducible and homogeneous SERS platforms, with a specified surface packing, but the tested compounds are mainly neurotransmitters, and the process is based on cyclic voltammetry.

Publication [8] presents a method of production of SERS substrates involving the lithographic creation of a polymer matrix on ITO, followed by electrodeposition of precious metals including silver on it, however, despite the statement about reproducibility, the degree of its SERS results was not presented, and the enhancement measurements were conducted only for one analyte, namely rodamine 6G (R6G), so nothing is known about the universality of these platforms..

Another publication describing the preparation of substrates for SERS using the electrochemical method is [9], where the authors obtain active surfaces with different shapes of gold nanoparticles, whilst investigating the different durations of the electrochemical process. Despite showing the advantages of the substrates produced, namely the high level of reproducibility of SERS signals collected over the entire surface, as well as from several subsequent substrates, and their stability over time, the universality of these platforms for a wider range of analytes was not indicated. In addition, many substrates were used for the process, and the substrate itself requires sputter-coating with gold prior to the process, which extends the production time.

In publication [10] the authors present an electrochemical method of obtaining SERS substrates. Although the process is simple, its duration is long (over 1 hour), and the spectra shown are only for one of the simplest analytes (rhodamine). In addition, the spectrum of the $10^{-10}$ M solution of said analyte, which concentration is the limit of detection for these substrates, is very weak, furthermore no comparison with the spectrum of the substrate itself before the application of the analyte has been included.

There is a huge range of literature on SERS substrates, but there continue to be difficulties in producing a very good platform. There are also patent applications regarding the above topic, of which some important ones shall be presented below.

The main approach is based on obtaining nanoparticles (nanostructures) in the process of electrodepositing them on various substrates that are electrodes, which are then immersed in specific electrolyte solutions. Example inventions US7449757(B2) "Nanostructures with electrodeposited nanoparticles", US20080081388(A1) "Composite nanostructure apparatus and method", US20090101996(A1) "Nanostructures with electrodeposited nanoparticles" indicate various techniques by which structures of metal nanoparticles of specified sizes and shapes can be obtained. These effects can be obtained by selecting the appropriate parameters, e.g. by changing the duration of the process and the concentration of reagents, selecting the impulses of the applied potential, as well as the addition of a substance assisting the process.

In order to obtain the best surface structure, it is often modified with various compounds. In the example invention US20120010411(A1) "Modified surface", the surfaces are modified with various organic or organometallic derivatives. In another patent US20120208722(A1) "Surface enhanced framework spectroscopy platforms and methods" biosensors are obtained by the modification and immobilization of specific compounds, as well as by the formation of films with immobilized compounds WO2004011672(A1) "Porous nanostructures film sensor".

Searching the literature, over many years, a large number of methods for obtaining specific structures of nanoparticles, including for SERS, can be found. They have employed, among others, polymer compounds or organic derivatives, lithography and vacuum sputtering techniques, and several layers of nanoparticles have been obtained on surfaces, as in the examples of inventions US20120217165(A1) "Metal deposition using seed layers", WO2012026882(A1) "Substrate for optical sensing by surface enhanced Raman spectroscopy (SERS) and methods for forming the same" and US8093065(B2) "Microbead optical sensor with a layered structure for enhanced detection of chemical groups by SERS".

However, one of the most common methods for the production of nanoparticles and the surfaces constructed of them are electrochemical techniques. In the example of the invention NL2009442 "Method for depositing metal nanoparticles on a surface, surface fabricated with the method, and the application thereof" nanoparticles are deposited on the surface by cyclic voltammetry. Many important parameters are taken into account during the nanoparticle deposition processes, such as the selection of the correct value of applied potential, concentration of reagents or the addition of reducing substances.

One of the most important parameters of the processes of obtaining nanoparticles is temperature. From patent application P.408785 "A method of depositing metal nanoparticles on a surface in an electrochemical process, the surface obtained by this method and its application" a method for obtaining a surface for SERS in an electrochemical process is known which takes into account the influence of the temperature of the electrolyte solution. Although many parameters are well controlled, the universality of the substrates for different groups of compounds is not shown and the spectra of the surface itself before applying the analyte are not shown in detail. Most importantly, the degree of reproducibility in the series and the homogeneity are not great (the standard deviation is max. 25%).

Due to the huge number of scientific papers presenting a diversity of methods for obtaining SERS platforms, it is easy to see that what is important is access to reproducible substrates and preferably those that are universal for a wide group of analytes. However, despite many disclosed electrochemical methods, it has still not been possible to obtain a surface that meets all the parameters required for analysis, i.e. the ability to greatly enhance the Raman signal, uniformly over the entire surface, which can be reproducibly obtained.

The aim of the invention is therefore to develop a new method for depositing metal nanoparticles on a surface and to prepare an electrolyte solution in an electrochemical process that would be free from the above-mentioned disadvantages of the known processes.

The method of depositing metal nanoparticles on a surface in an electrochemical process using a working, reference and auxiliary electrode in which the surface constitutes a working electrode and is at least partially immersed in an aqueous solution containing metal ions forming the electrolyte solution, the nanoparticles are deposited on the surface of the working electrode under the influence of a time-varying electric potential applied to it, and prior to the electrochemical process the electrolyte solution is heated to a temperature in the range of 5°C to 80°C, according to the invention, is characterized by the fact that the working electrode is set at an angle of 45° to 110° in relation to the auxiliary electrode, the applied electric potential is time-varying in a stepwise manner and that the active surface on the working electrode is limited.

Preferably, the electrolyte solution is heated to a temperature in the range of 40°C to 70°C, more preferably 60°C.

Preferably, the working electrode is positioned at an angle of 80° to 100° with respect to the auxiliary electrode.

Preferably, the potential change is in the range from -0.8V to -1.4V, or from -0.6V to -1.2V, or most preferably from -0.7V to -1.3V.

Preferably, the change in potential occurs in repetitive cycles, preferably triangular, preferably of 10 seconds duration.

Preferably, the active area on the working electrode is from $9mm^2$ to $66mm^2$, more preferably from $16mm^2$ to $30mm^2$.

Preferably, the electrodes are placed in the electrolyte solution after it has been heated to the required temperature; preferably the system tightness and the required electrolyte temperature are maintained during the situating of the electrodes.

Preferably, the electrochemical process is carried out for a period of 1 to 20 minutes, preferably for 8 to 18 min, more preferably for 15 min.

Preferably, during the electrochemical process the solution is slowly cooled by 2°C - 3°C.

Preferably, during the electrochemical process the solution is evenly mixed.

Preferably, a glass plate coated with conductive oxide, preferably FTO (Fluorine-doped Tin Oxide), more preferably ITO (Indium Tin Oxide) is used as the working electrode.

Preferably, the method includes washing the working electrode before the electrochemical process, preferably washing in an ultrasonic cleaner in solvents in the following order: acetone, isopropanol, methanol, distilled water, in each for 5 to 25 minutes, preferably 15 minutes.

Preferably, a reference electrode is used, preferably in the form of a silver or silver-chloride electrode or a silver wire.

Preferably, an auxiliary electrode is used, preferably a platinum wire or a platinum mesh.

Preferably, the method includes washing the reference electrode and the auxiliary electrode before the electrochemical process, preferably washing in an ultrasonic cleaner in each of the following solvents: methanol, distilled water, preferably in each for 15 minutes.

Preferably, the metal ions are metal ions selected from the group consisting of Cu, Ag, Au, Al and Pt.

Preferably, the concentration of the metal ions is 0.1mM - 3mM.

Preferably, the source of the metal ions is $AgNO_3$ or $HAuCl_4$ at a concentration of 0.3mM.

Preferably, said electrolyte solution further includes a substance which pre-reduces and stabilizes metal ions, preferably an organic salt, more preferably an inorganic salt.

Preferably, the concentration of the pre-reducing and stabilizing substance of the metal ions is from 1mM do 10mM.

Preferably, the organic salt is sodium citrate, $C_6H_5Na_3O_7$, preferably at a concentration of 2.6mM.

Preferably, the inorganic salt is sodium sulphite, $Na_2SO_3$, preferably at a concentration of 1.3mM.

Preferably, the method includes the additional step of cleaning the surface of impurities, which involves firing the surface with the applied metal nanoparticles at a temperature of 200°C - 220°C for 2 minutes, most preferably at 210°C.

The subject of the invention is also a surface coated with nanoparticles, preferably homogeneously, obtained by the above method.

Preferably, the surface area coated with nanoparticles is $9mm^2$ - $66mm^2$, more preferably $16mm^2$ - $30mm^2$.

Preferably, the average size of the nanoparticles on the surface is from 50nm to 400nm.

Preferably, the nanoparticles have a spherical oval shape.

According to the invention, the surface obtained by the above method is preferably used as a platform for surface enhanced Raman Scattering (SERS) or for localized surface plasmon resonance (LSPR) studies.

The subject of this invention is an easy, cheap and fast method of applying metal nanoparticles to a conductive substrate, cleaning the surface of the obtained substrate and using the obtained platform in SERS and/or LSPR studies. The great advantage of the presented method is the short duration of the process and the use of generally available and safe substrates for the process.

The method according to the invention is based on a three-electrode electrochemical process, where under the influence of an applied time-varying potential and at the appropriate temperature, metal nanoparticles from an electrolyte solution containing ions of this metal and preferably a substance pre-reducing and stabilizing the metal ions are applied to a working electrode. Unexpectedly, it transpired that to obtain good platforms it is necessary to heat the electrolyte solution before starting the electrochemical process to a temperature ranging from 5°C to 80°C, preferably from 40°C - 70°C, more preferably 60°C. Heating the solution has a positive effect on the production of nanoparticles and their size and their correct distribution on the surface.

The preferable variants of the invention make it possible to obtain platforms that exhibit both very good reproducibility in the batch range as well as uniform intensity of signals from measurements of SERS spectra over the entire platform surface. Unexpectedly, it turned out that cooling the solution by 2°C - 3°C during the process has the positive effect of improving the parameters (including the enhancement factor, reproducibility, uniformity) of the platforms obtained. However, the increase in temperature during the process adversely affects the quality of the substrates.

Another method to improve the parameters, especially homogeneity, is to place the electrodes in the electrolyte solution only after heating it to the required temperature, which prevents long-term heating and thus degradation of the surface of the working electrode due to the high temperature.

The surface obtained by this method has the structure of silver nanoparticles, however, as is well known, silver undergoes oxidation rapidly, which leads to the formation of silver oxides. This phenomenon is undesirable when using the obtained surface as a SERS platform, due to the visible signals of silver oxides on the Raman spectrum. As a result, a reliable SERS analysis of the test substance on these surfaces is difficult because the spectra obtained may contain signals originating from silver oxides. In the method according to this invention, a simple method is proposed that makes it possible to clean the obtained SERS substrate from unnecessary contamination whilst simultaneously not disturbing the surface structure. The SERS substrate prepared in accordance with the above method is preferably placed in a furnace, where the surface is fired at a suitably high temperature, more preferably 2 minutes at a temperature in the range of 200°C - 220°C and most preferably for 2 minutes at 210°C.

Another preferable variant is the limitation of the active surface on the working electrode through photolithographic masking. Although this technique is generally known [11], [12], in this invention the optimized geometry and surface dimensions allowed for a significant improvement in the reproducibility of the results.

In the state of technology as in the example of the invention P.408785 "Method for depositing metal nanoparticles on the surface in an electrochemical process, the surface obtained by this method and its application", it is known to arrange the electrodes in an electrochemical process in such a way that the reference electrode is closest to the working electrode, opposite which there is an auxiliary electrode. However, in the above-described method according to the invention, it proved very preferable to position the electrodes in a new position during the electrodeposition process, where the working electrode is positioned at an angle of 45° to 100° with respect to the auxiliary electrode, and most preferably at an angle of 80°. This allowed for visual improvement of the substrates and additionally for an increase in the uniformity of the SERS signals on the surface.

A common problem when obtaining SERS substrates is contaminants, such as, for example in [13] from process by-products. Using an organic salt (sodium citrate) as a substance pre-reducing and stabilizing metal ions in the reaction solution, organic contaminants can randomly be seen on the Raman spectra that hinder robust spectroscopic analysis. Accordingly, a preferred variant of this invention is the use of an inorganic salt, that is, sodium sulphite, thereby eliminating the organic contaminants that are formed during the process. It is already known to use this substance as a reducer [14], but not in the process of obtaining SERS substrates by electrochemical techniques.

Method of measurement of SERS spectra

Raman spectra were recorded using an i-Raman (BWTEK) portable Raman spectrometer coupled to a BAC151B (BWTEK) microscope. The apparatus has good resolution, while the wavelength of the excitation light used in the measurements was 785 nm. The spectrometer is equipped with a sensitive CCD detector. During the tests, a 50x magnification laser focusing lens was used on the sample. The spectra were collected in 1 to 4 seconds, while the laser power used for 785nm wavelength measurements ranged from 4mW to 8mW for SERS and 20mW measurements when normal Raman spectra were recorded.

*Enhancement factor*

The enhancement factor (EF) is the ratio of integral intensities (intensity at maximum) of the molecules adsorbed on the surface to the integral intensities of the molecules in the solution. It is denoted by the expression:

$$EF = (I_{SERS}/I_{RAMAN})/(N_{SERS}/N_{RAMAN})$$

where:

$I_{SERS}$ - measured integral intensity of the band in the SERS spectrum of molecules adsorbed on the surface,

$I_{Raman}$ - measured integral intensity of the band in the Raman spectrum of molecules in the solution,

$N_{SERS}$ - denotes the number of adsorbed molecules "illuminated" by laser light to obtain the SERS spectrum,

$N_{Raman}$ - denotes the number of molecules in the solution "illuminated" by laser light in order to obtain the Raman spectrum.

$N_{Raman}$ - determined using the expression:

$$N_{Raman} = (V_R \times d \times N_A)/M$$

where:

$V_R$ - sample volume, excited by laser light, calculated for 1M solution, taking into account the spectral features of the system, i.e. laser line 785nm, aperture and lens magnification, focusing depth, and laser spot size (42 $\mu$m),
d - density of the analyte,
$N_A$ - Avogadro number equal to $6.02 \times 10^{23}$,
M - molar mass of the analyte.

$N_{SERS}$ - was estimated based on the surface coverage, with the assumption that the molecules are adsorbed on the surface to form a monolayer, and the size of the surface illuminated by the laser, using the expression:

$$N_{SERS} = N_m \times A$$

where:

$N_m$ - number of molecules in the stock solution used for adsorption,
A - surface area illuminated by the laser, where $A = \pi \times S$, where S is the size of the laser spot.

Uniformity (within one platform)

Uniformity means the reproducibility of SERS spectra recorded at various selected points within one substrate. It is determined based on consistency in terms of intensity and position of the respective bands on the spectra collected in the same conditions under the same measurement conditions. This parameter is determined by calculating the standard deviation of the intensity of the characteristic bands on the spectra. Uniform surfaces were taken to be those for which the standard deviation does not exceed 17%.

Reproducibility of substrates (within successive platforms)

Reproducibility of substrates means the reproducibility of SERS spectra recorded on various substrates (e.g. on a series of 30 platforms). It is determined based on consistency in terms of the intensity and position of the respective bands on successively collected spectra in the same conditions under the same measurement conditions. This parameter is determined by calculating the standard deviation of the intensity of the characteristic bands on the spectra. Reproducible series of substrates were taken to be those for which the average standard deviation does not exceed 17%.

**Preferred embodiments of the invention**

The invention will be described in more detail in the preferred embodiments, with reference to the accompanying drawings, where:

Fig. 1 shows the design of a limited active surface on the working electrode prepared in the photolithography process,

Fig. 2 shows a photograph of the substrate surface according to the invention from a scanning electron microscope (SEM) performed at three magnifications, Fig. 2a: 10,000, Fig. 2b: 25,000 and Fig. 2c: 100,000 times,

Fig. 3 shows the Raman spectrum of the surface obtained in the electrochemical process according to the invention using as a pre-reducing and stabilizing substance a) sodium citrate ($C_6H_5Na_3O_7$) and b) sodium sulphite ($Na_2SO_3$),

Fig. 4 shows the Raman spectrum of the SERS surface obtained according to the invention in the process using sodium citrate a) before it is purified, b) after purifying by firing at a temperature of 210°C for 2 minutes,

Fig. 5 shows the Raman spectrum of the SERS surface obtained according to the invention in the process using sodium sulphite a) before it is purified, b) after purifying by firing at a temperature of 210°C for 2 minutes,

Fig. 6 shows spectra of para-mercaptobenzoic acid (PMBA) adsorbed from a $10^{-6}$ M solution on the SERS surface according to the invention recorded from 30 consecutive substrates,

Fig. 7 shows the spectrum of amphetamine adsorbed from a $10^{-4}$ M solution on the SERS surface according to the invention,

Fig. 8 shows the spectrum of L-phenylalanine adsorbed from a $10^{-3}$ M solution on the SERS surface according to the invention,

Fig. 9 shows the spectrum of Escherichia coli bacteria at a concentration of $10^9$ recorded on the surface for SERS measurements according to the invention.

**Example 1**

**Preparation of a limited active surface on the working electrode in the photolithography process**

On an ITO plate, cleaned by washing in an ultrasonic cleaner successively in each of the following solvents for 15 minutes: acetone, isopropanol, methanol, water, and dried with a stream of nitrogen, a AZ ECI 3027 photoresist was applied and centrifuged for 1 minute at 4000 rpm until a thickness of $1.7\mu m$ was obtained. Then, the photoresist layer was heated for 90 seconds at a temperature of 90°C, after which it was irradiated with UV radiation 3 times for 12 seconds each with an interval of 20 seconds between exposures, through a mask prepared by us with a specified geometry and surface, and once again it was heated for 90 seconds at 110 °C. The photoresist thus exposed was removed in a developer and the unprotected ITO layer was digested in a mixture of $HCl:FeCl_3: H_2O$ in a volume ratio of 1:3:1 at 60°C. The digestion process was carried out until complete removal of the ITO layer which was controlled by measuring the conductivity, and then washed in distilled water and the remaining photoresist layer was removed with acetone. Finally, the plate was washed in an aqueous solution with 20% ethanolamine for 30 minutes at 85°C and several times in distilled water, after which it was dried.

In general, positive photoresist can be used.

In general, the photoresist can be centrifuged for 40 to 80 seconds.

In general, the photoresist can be centrifuged at speeds from 2000rpm to 5000rpm.

In general, the photoresist can be irradiated from 1 to 5 times, for 5 to 20 seconds, with an interval between exposures of 10 to 30 seconds.

An ITO plate prepared in this way, with a limited active surface, is a working electrode, in this case with a surface area of $20mm^2$.

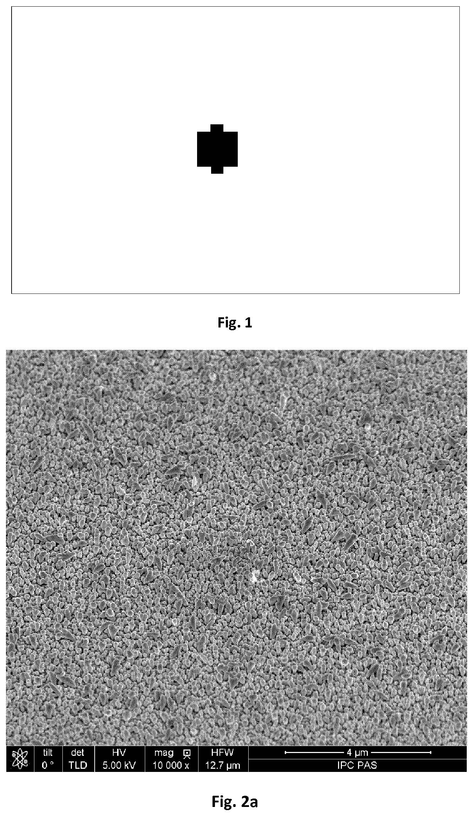

The design of such a surface is shown in Fig. 1.

## Example 2

### Obtaining a surface with electro-deposited silver nanoparticles using sodium citrate ($C_6H_5Na_3O_7$)

The prepared aqueous electrolyte solution, containing 0.3mM silver nitrate and 2.6mM sodium citrate, was heated to 60°C. The maintenance of uniform mixing, temperature and tightness of the system should be controlled throughout the process of applying the nanoparticles. After reaching the appropriate temperature, after prior cleaning and drying, three electrodes were placed in the electrochemical vessel in such a way that the working electrode, i.e. the ITO plate prepared earlier in the photolithography process with a limited active surface, was set at an angle of 80° to 100° to the auxiliary electrode (platinum mesh) and the reference electrode (silver wire) was located closest to the working electrode. Next, a time-varying potential was applied to the working electrode in such a way that the change in potential ran stepwise from -0.7V to -1.3V, followed by a return to the value of -0.7V, and each such cycle of changes (step) lasted 10 seconds and was repeated for the duration of the entire process, i.e. for 15 minutes. The obtained substrate with electrodeposited silver nanoparticles was washed with distilled water and allowed to dry.

The obtained substrates had a regular, rough structure with spherical oval nanoparticles of 50-400 nm, stable in time.

In general, the range of potentials applied to the working electrode can range from - 0.8V to -1.4V and -0.6V to -1.2V.

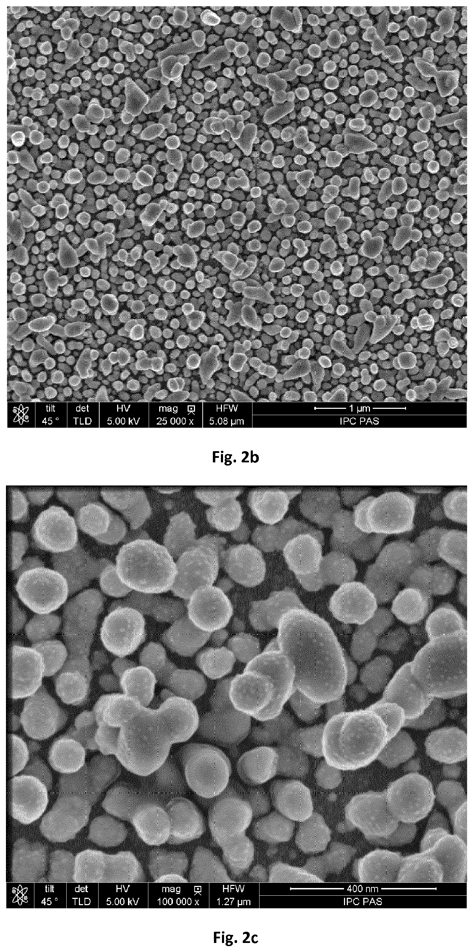

A SEM picture of the surface prepared in this way is presented in Fig. 2.

## Example 3

### Obtaining a surface with electro-deposited silver nanoparticles using sodium sulphite (Na_2SO_3)

The prepared aqueous electrolyte solution, containing 0.3mM silver nitrate and 1.3mM sodium suplhite, was heated to 60°C. The maintenance of uniform mixing, temperature and tightness of the system should be controlled throughout the process of applying the nanoparticles. After reaching the appropriate temperature, after prior cleaning and drying, three electrodes were placed in the electrochemical vessel in such a way that the working electrode, i.e. the ITO plate prepared earlier in the photolithography process with a limited active surface, was set at an angle of 80° to 100° to the auxiliary electrode (platinum mesh) and the reference electrode (silver wire) was located closest to the working electrode. Next, a time-varying potential was applied to the working electrode in such a way that the change in potential ran stepwise from -0.7V to -1.3V, followed by a return to the value of -0.7V, and each such cycle of changes (step) lasted 10 seconds and was repeated for the duration of the entire process, i.e. for 15 minutes. The obtained substrate with electrodeposited silver nanoparticles was washed with distilled water and allowed to dry.

The obtained substrates had a regular, rough structure with spherical oval nanoparticles of 50-400 nm, stable in time.

In general, the range of potentials applied to the working electrode can range from - 0.8V to -1.4V and -0.6V to -1.2V.

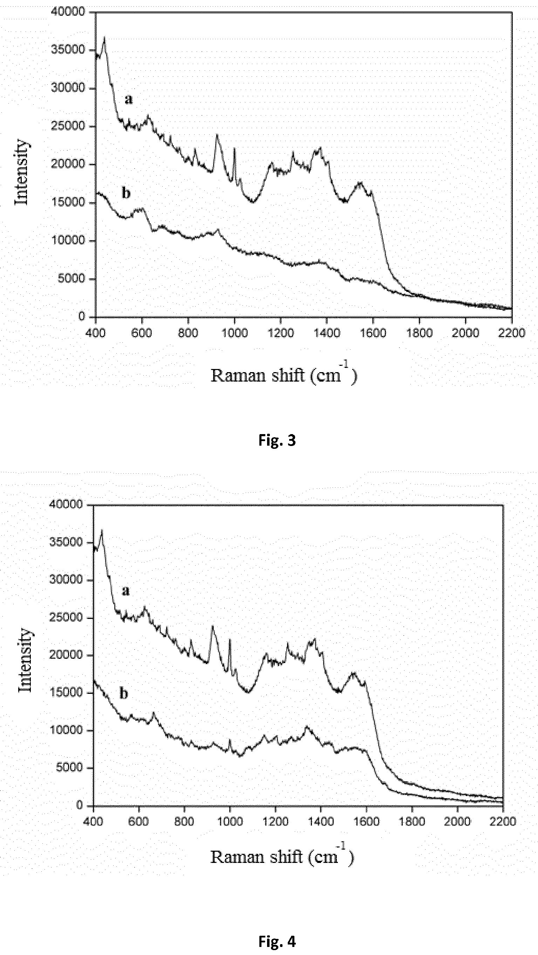

On the Raman spectrum of the surface obtained by this method, we do not see signals belonging to process by-products that can sporadically be detected during the process using sodium citrate, as shown in Fig. 3.

## Example 4

### Cleaning the surface obtained with electrodeposited silver nanoparticles

The obtained surface with silver nanoparticles was placed in a tubular furnace, where it was fired for 2 minutes at 210°C.

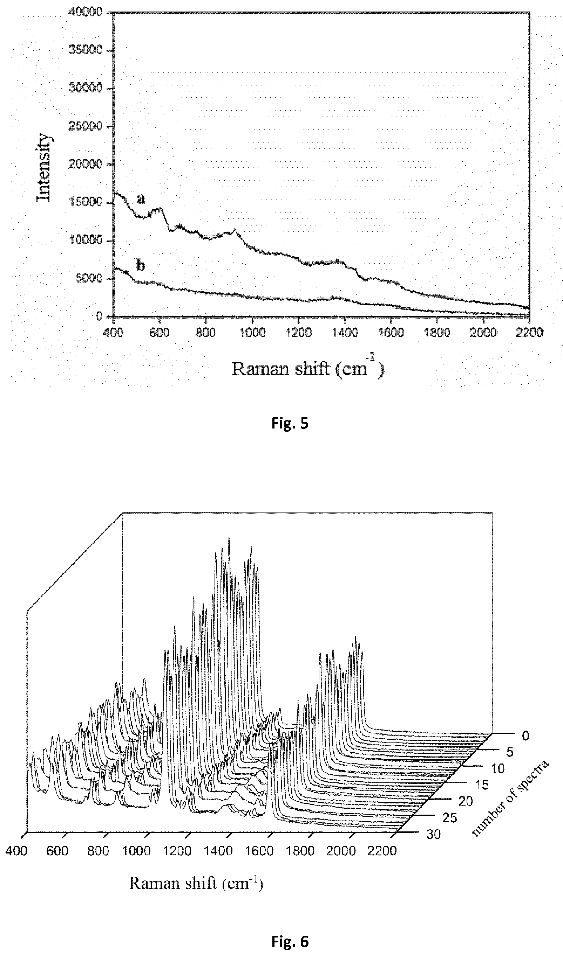

The surface thus prepared and cleaned is a SERS substrate, and the Raman spectra of such surfaces are shown in Fig. 4 and Fig. 5.

## Example 5

### Obtaining a surface with electrodeposited gold nanoparticles

The prepared aqueous electrolyte solution, containing 0.3mM tetrachloroauric acid and 2.6mM sodium citrate or 1.3mM sodium suplhite, was heated to 60°C. The maintenance of uniform mixing, temperature and tightness of the system should be controlled throughout the process of applying the nanoparticles. After reaching the appropriate temperature, after prior cleaning and drying, three electrodes were placed in the electrochemical vessel in such a way that the working electrode, i.e. the ITO plate prepared earlier in the photolithography process with a limited active surface, was set at an angle of 80° to 100° to the auxiliary electrode (platinum mesh) and the reference electrode (silver chloride) was located closest to the working electrode. Next, a time-varying potential was applied to the working electrode in such a way that the change in potential ran cyclically between -0.8V to 0.5V, in 25 cycles at 100mV/s. The obtained substrate with electrodeposited gold nanoparticles was washed with distilled water and allowed to dry.

In general, the number of cycles of potential changes applied to the working electrode can be from 10 to 30 cycles, at speeds of 80 to 140 mV/s.

A surface prepared in this manner constitutes a substrate for SERS measurements.

## Example 6

### Obtaining a surface with electrodeposited gold nanoparticles on a layer of electrodeposited silver nanoparticles (hybrid)

The prepared aqueous electrolyte solution, containing 0.3mM silver nitrate and 2.6mM sodium citrate or 1.3mM sodium sulphite, was heated to 60°C. The maintenance of uniform mixing, temperature and tightness of the system should be controlled throughout the process of applying the nanoparticles. After reaching the correct temperature, after prior cleaning and drying, three electrodes were placed in the electrochemical vessel in such a way that the working electrode, i.e. the ITO plate prepared earlier in the photolithography process with a limited active surface, was set at an angle of 80° to 100° to the auxiliary electrode (platinum mesh) and the reference electrode (silver wire) was located closest to the working electrode. Next, a time-varying potential was applied to the working electrode in such a way that the change in potential ran stepwise from -0.7V to -1.3V, followed by a return to the value of - 0.7V, and each such cycle of changes (step) lasted 10 seconds and was repeated for the duration of the entire process, i.e. for 15 minutes. The obtained substrate with electrodeposited silver nanoparticles was washed with distilled water and allowed to dry. Next, in an aqueous electrolyte solution, containing 0.3mM tetrachloroauric acid and 2.6mM sodium citrate or 1.3mM sodium sulphite, the thus prepared surface with silver nanoparticles was placed as the working electrode such that the electrode was set at an angle of 80° to 100° to the auxiliary electrode (platinum mesh) and the reference electrode (silver chloride) was located closest to the working electrode. Next, a constant potential of -0.3V for 400 seconds was applied to the working electrode. The obtained substrate with electrodeposited gold nanoparticles on a layer of silver nanoparticles was washed with distilled water and allowed to dry.

In general, the range of potentials applied to the working electrode in the electroplating of silver nanoparticles can range from -0.8V to -1.4V and -0.6V to -1.2V.

In general, the value of the constant potential applied to the electrode working to apply the layer of gold nanoparticles can be from -0.5V to -0.2V, over a period of from 300 to 500 seconds.

A surface prepared in this manner constitutes a SERS substrate.

## Example 7

### Raman spectra of SERS measurement surfaces

The SERS surface was examined using Raman spectroscopy and Raman spectra were recorded from a dozen or so random spots on this surface. The measurements were made in the following conditions: laser with an excitation line of 785 nm and a power of 20 mW, with an accumulation time of 4 seconds.

All the spectra were almost identical, while examples for the surface with silver and gold nanoparticles are shown in Fig. 3, Fig. 4 and Fig. 5.

## Example 8

### SERS spectra of para-mercaptobenzoic acid (PMBA)

Another 30 SERS surfaces were immersed into a $10^{-6}$ M para-mercaptobenzoic acid analyte solution. Then, the substrates were dried and on each of them several Raman spectra were recorded from various points of the surface. Fig. 6 shows 30 spectra of the adsorbed analyte, averaged for each surface, for the 30 subsequent substrates, respectively.

The recorded spectra showed very good reproducibility. The bands characteristic of para-mercaptobenzoic acid (1078 and 1590 $cm^{-1}$) were visible and very intense in each spectrum, confirming the homogeneity and reproducibility of the signals on the SERS surface according to this invention. The enhancement factor (EF) as defined above for para-mercaptobenzoic acid, which is in the range of $10^5$-$10^6$, was also estimated.

## Example 9

**SERS spectrum of amphetamine**

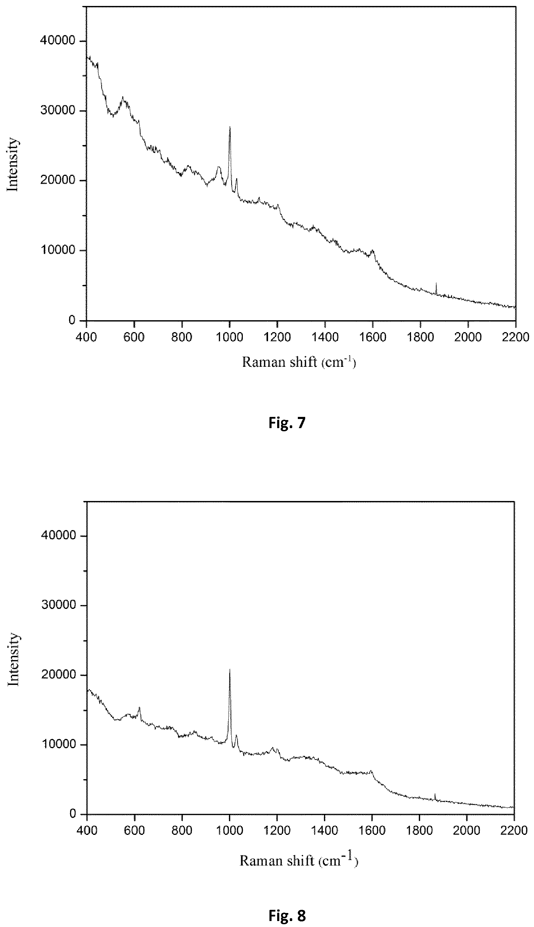

The SERS surface was immersed into $10^{-4}$ M amphetamine solution. The substrate was then dried and the Raman spectra recorded. Fig. 7 shows an example spectrum of the adsorbed analyte.

The recorded spectra showed good reproducibility. The main bands characteristic of amphetamine (1001 and 1029 cm$^{-1}$) were clearly visible in each spectrum. In addition, much weaker bands can be seen at 838, 950, 1205, 1605 cm$^{-1}$

## Example 10

**SERS spectrum of L-phenylalanine**

The SERS surface was immersed into $10^{-3}$ M L-phenylalanine solution. The substrate was then dried and the Raman spectra recorded. Fig. 8 shows an example spectrum of the adsorbed analyte.

The recorded spectra showed good reproducibility. The main bands characteristic of L-phenylalanine (1001 and 1029 cm$^{-1}$) were clearly visible in each spectrum. In addition, much weaker bands can be seen at 620, 1200, 1602 cm$^{-1}$

## Example 11

**SERS Spectrum of Escherichia coli**

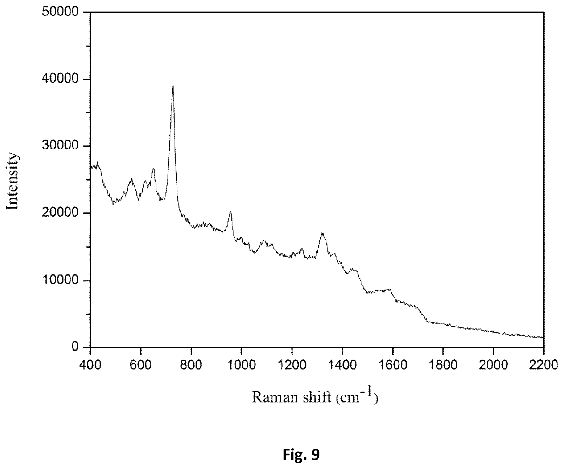

A $10^9$ solution of Escherichia coli bacteria was applied to the SERS surface. Then the Raman spectra were recorded. Fig. 9 shows an example spectrum of the measured substance.

The recorded spectra showed good reproducibility. The main band characteristic for E. coli (729 cm$^{-1}$) was clearly visible in each spectrum. In addition, lower intensity bands were visible at shifts of 570, 650, 954, 1093, 1332 cm$^{-1}$.

## Bibliography

Numeric references in square brackets refer to the following items:

[1] M. Fleischmann, P. J. Hendra, and A. J. McQuillan, "Raman spectra of pyridine adsorbed at a silver electrode," Chem. Phys. Lett., vol. 26, no. 2, pp. 163-166, May 1974.

[2] K. Kneipp, Y. Wang, H. Kneipp, L. T. Perelman, I. Itzkan, R. R. Dasari, and M. S. Feld, "Single Molecule Detection Using Surface-Enhanced Raman Scattering (SERS)," Phys. Rev. Lett., vol. 78, no. 9, pp. 1667-1670, Mar. 1997.

[3] S. Nie and S. R. Emory, "Probing Single Molecules and Single Nanoparticles by Surface-Enhanced Raman Scattering," Science, vol. 275, no. 5303, pp. 1102-1106, Feb. 1997.

[4] B. Sharma, R. R. Frontiera, A.-I. Henry, E. Ringe, and R. P. Van Duyne, "SERS: Materials, applications, and the future," Mater. Today, vol. 15, no. 1-2, pp. 16-25, Jan. 2012.

[5] W. Plieth, H. Dietz, A. Anders, G. Sandmann, A. Meixner, M. Weber, and H. Kneppe, "Electrochemical preparation of silver and gold nanoparticles: Characterization by confocal and surface enhanced Raman microscopy," Surf. Sci., vol. 597, no. 1-3, pp. 119-126, Dec. 2005.

[6] J.-C. Bian, Z. Li, Z.-D. Chen, H.-Y. He, X.-W. Zhang, X. Li, and G.-R. Han, "Electrodeposition of silver nanoparticle arrays on ITO coated glass and their application as reproducible surface-enhanced Raman scattering substrate," Appl. Surf. Sci., vol. 258, no. 5, pp. 1831-1835, Dec. 2011.

[7] M. Siek, A. Kaminska, A. Kelm, T. Rolinski, R. Holyst, M. Opallo, and J. Niedziolka-Jonsson, "Electrodeposition for preparation of efficient surface-enhanced Raman scattering-active silver nanoparticle substrates for neurotransmitter detection," Electrochimica Acta, vol. 89, pp. 284-291, Feb. 2013.

[8] S. Wang, L.-P. Xu, Y. Wen, H. Du, S. Wang, and X. Zhang, "Space-confined fabrication of silver nanodendrites and their enhanced SERS activity," Nanoscale, vol. 5, no. 10, pp. 4284-4290, May 2013.

[9] S. Choi, M. Ahn, and J. Kim, "Highly reproducible surface-enhanced Raman scattering-active Au nanostructures prepared by simple electrodeposition: Origin of surface-enhanced Raman scattering activity and applications as electrochemical substrates," Anal. Chim. Acta, vol. 779, pp. 1-7, May 2013.

[10] J.-C. Bian, Z.-D. Chen, Z. Li, F. Yang, H.-Y. He, J. Wang, J. Z. Y. Tan, J.-L. Zeng, R.-Q. Peng, X.-W. Zhang, and G.-R. Han, "Electrodeposition of hierarchical Ag nanostructures on ITO glass for reproducible and sensitive SERS application," Appl. Surf. Sci., vol. 258, no. 17, pp. 6632-6636, Jun. 2012.

[11] S. E. Lyshevski, "Nano- and Micro-Electromechanical Systems", CRC Press, Second Edition, Jan. 2005.

[12] E. Rozniecka, M. Jonsson-Niedziolka, A. Celebanska, J. Niedziolka-Jonsson, M. Opallo, "Selective electrochemical detection of dopamine in a microfluidic channel on carbon nanoparticulate electrodes", Analyst, vol. 139, pp. 2896-2903, 2014.

[13] K. L. Norrod, K. L. Rowlen, "Removal of carbonaceous contamination from SERS-active silver by self-assembly of decanethiol", Anal. Chem., vol. 70, pp. 4218-4221, 1998.

[14] J. V. Goshu, Yu. V. Tsarev, V. V. Kostrov, "Sewage treatment for chromium(VI) disposal by combined reduction with sodium sulfite in the presence of solid adsorbents", Catalysis in Industry, vol. 2, no. 2, pp. 126-130, 2010.

## Acknowledgements

The research was carried out as part of a project co-financed by the National Centre for Research and Development under the Applied Research Programme (PBS2/A1/8/2013). The creators would like to thank the Central Police Forensic Laboratory in Warsaw for their cooperation.

## Claims

1. The method of depositing metal nanoparticles on a surface in an electrochemical process using a working, reference and auxiliary electrode in which the surface constitutes a working electrode and is at least partially immersed in an aqueous solution containing metal ions, forming an electrolyte solution, the nanoparticles are deposited on the surface of the working electrode under the influence of a time-varying electric potential applied to it and prior to the commencement of the electrochemical process the electrolyte solution is heated to a temperature in the range from 5°C to 80°C, **characterized in that** the working electrode, preferably in the form of a glass plate coated with a conductive oxide, more preferably FTO (Fluorine-doped Tin Oxide), most preferably ITO (Indium Tin Oxide), is set at an angle of 45° to 110° with respect to the auxiliary electrode, the applied electric potential is time-varying in a step-wise manner and that the active surface on the electrode is limited.

2. The method according to Claim 1, **characterized in that** the electrolyte solution is heated to a temperature in the range 40°C to 70°C, more preferably 60°C.

3. The method according to Claim 1 or 2, **characterized in that** the working electrode is set at an angle of 80° to 100° with respect to the auxiliary electrode and the active surface of the working electrode is preferably from 9mm$^2$ to 66mm$^2$, more preferably from 16mm$^2$ to 30mm$^2$.

4. The method according to any one of claims 1 to 3, **characterized in that** the potential change is in the range from -0.8V to -1.4V, or from -0.6V to -1.2V, or most preferably from -0.7V to -1.3V and preferably takes place in repetitive cycles, more preferably triangular, most preferably with a duration of 10 seconds.

5. The method according to any one of claims 1 to 4, **characterized in that** the electrodes are placed in the electrolyte solution after heating it to the required temperature, preferably, when the electrodes are placed, the system tightness and the required electrolyte temperature are maintained.

6. The method according to any one of claims 1 to 5, **characterized in that** the electrochemical process is carried out for 1 to 20 minutes, preferably from 8 to 18 min, more preferably for 15 min, during which time the solution is preferably cooled slowly by 2°C - 3°C, more preferably, during which the solution is evenly mixed.

7. The method according to any one of claims 1 to 6, **characterized in that** it includes washing the working electrode before the electrochemical process, preferably washing in an ultrasonic cleaner in solvents in the following order: acetone, isopropanol, methanol, distilled water, in each for 5 to 25 minutes, preferably 15 minutes.

8. The method according to any one of claims 1 to 7, **characterized in that** a reference electrode is used, preferably in the form of a silver or silver chloride electrode or silver wire and an auxiliary electrode, preferably in the form of a platinum wire or a platinum mesh.

9. The method according to claim 8, **characterized in that** it includes washing the reference electrode and the auxiliary electrode before the electrochemical process, preferably washing in an ultrasonic cleaner in each of the following solvents: methanol, distilled water, preferably in each for 15 minutes.

10. The method according to any one of claims 1 to 9, **characterized in that** as a source of metal ions selected from the group consisting of Cu, Ag, Au, Al and Pt, $AgNO_3$ or $HAuCl_4$ at a concentration of 0.3mM is preferably used, and the concentration of metal ions is preferably 0.1mM-3mM.

11. The method according to any one of claims 1 to 10, **characterized in that** said electrolyte solution additionally contains a substance which pre-reduces and stabilizes metal ions with a concentration of preferably from 1mM to 10mM, preferably an organic salt, more preferably an inorganic salt.

**12.** The method according to Claim 11, **characterized in that** sodium citrate, $C_6H_5Na_3O_7$, preferably 2.6 mM is used as an organic salt, and sodium sulphite, $Na_2SO_3$, preferably 1.3 mM, is used as the inorganic salt.

**13.** The method according to any one of claims 1 to 12, **characterized in that** it includes the additional step of cleaning the surface of contaminants, such that it is carried out by firing the surface with the deposited metal nanoparticles at a temperature of 200°C - 220°C for 2 minutes, most preferably at 210°C.

**14.** A surface coated, preferably uniformly, with nanoparticles, preferably having a spherical oval shape, obtained by a method according to any one of claims 1 to 13, whose surface area is preferably $9mm^2$-$66mm^2$, and more preferably $16mm^2$ - $30mm^2$ and the average size of the nanoparticles on the surface is preferably from 50nm to 400nm.

**15.** The use of a substrate according to claim 14 as a platform for surface enhanced Raman Scattering (SERS) measurements or for localized surface plasmon resonance (LSPR) measurements.

**Fig. 1**

| tilt | det | HV | mag ▣ | HFW | ├———— 4 µm ————┤ |
| 0 ° | TLD | 5.00 kV | 10 000 x | 12.7 µm | IPC PAS |

**Fig. 2a**

| tilt | det | HV | mag | | HFW | 1 µm |
|---|---|---|---|---|---|---|
| 45 ° | TLD | 5.00 kV | 25 000 x | | 5.08 µm | IPC PAS |

**Fig. 2b**

| tilt | det | HV | mag | | HFW | 400 nm |
|---|---|---|---|---|---|---|
| 45 ° | TLD | 5.00 kV | 100 000 x | | 1.27 µm | IPC PAS |

**Fig. 2c**

**Fig. 3**

**Fig. 4**

**Fig. 5**

**Fig. 6**

**Fig. 7**

**Fig. 8**

**Fig. 9**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7449757 B2
- US 20080081388 A1
- US 20090101996 A1
- US 20120010411 A1
- US 20120208722 A1
- WO 2004011672 A1
- US 20120217165 A1
- WO 2012026882 A1
- US 8093065 B
- NL 2009442
- WO P408785 A

### Non-patent literature cited in the description

- **M. FLEISCHMANN ; P. J. HENDRA ; A. J. MCQUIL-LAN.** Raman spectra of pyridine adsorbed at a silver electrode. *Chem. Phys. Lett.,* May 1974, vol. 26 (2), 163-166
- **K. KNEIPP ; Y. WANG ; H. KNEIPP ; L. T. PERELMAN ; I. ITZKAN ; R. R. DASARI ; M. S. FELD.** Single Molecule Detection Using Surface-Enhanced Raman Scattering (SERS). *Phys. Rev. Lett.,* March 1997, vol. 78 (9), 1667-1670
- **S. NIE ; S. R. EMORY.** Probing Single Molecules and Single Nanoparticles by Surface-Enhanced Raman Scattering. *Science,* February 1997, vol. 275 (5303), 1102-1106
- **B. SHARMA ; R. R. FRONTIERA ; A.-I. HENRY ; E. RINGE ; R. P. VAN DUYNE.** SERS: Materials, applications, and the future. *Mater. Today,* January 2012, vol. 15 (1-2), 16-25
- **W. PLIETH ; H. DIETZ ; A. ANDERS ; G. SANDMANN ; A. MEIXNER ; M. WEBER ; H. KNEPPE.** Electrochemical preparation of silver and gold nanoparticles: Characterization by confocal and surface enhanced Raman microscopy. *Surf. Sci.,* December 2005, vol. 597 (1-3), 119-126
- **J.-C. BIAN ; Z. LI ; Z.-D. CHEN ; H.-Y. HE ; X.-W. ZHANG ; X. LI ; G.-R. HAN.** Electrodeposition of silver nanoparticle arrays on ITO coated glass and their application as reproducible surface-enhanced Raman scattering substrate. *Appl. Surf. Sci.,* December 2011, vol. 258 (5), 1831-1835
- **M. SIEK ; A. KAMINSKA ; A. KELM ; T. ROLINSKI ; R. HOLYST ; M. OPALLO ; J. NIEDZIOLKA-JON-SSON.** Electrodeposition for preparation of efficient surface-enhanced Raman scattering-active silver nanoparticle substrates for neurotransmitter detection. *Electrochimica Acta,* February 2013, vol. 89, 284-291
- **S. WANG ; L.-P. XU ; Y. WEN ; H. DU, S. WANG ; X. ZHANG.** Space-confined fabrication of silver nanodendrites and their enhanced SERS activity. *Nanoscale,* May 2013, vol. 5 (10), 4284-4290
- **S. CHOI ; M. AHN ; J. KIM.** Highly reproducible surface-enhanced Raman scattering-active Au nanostructures prepared by simple electrodeposition: Origin of surface-enhanced Raman scattering activity and applications as electrochemical substrates. *Anal. Chim. Acta,* May 2013, vol. 779, 1-7
- **J.-C. BIAN ; Z.-D. CHEN ; Z. LI ; F. YANG ; H.-Y. HE ; J. WANG ; J. Z. Y. TAN ; J.-L. ZENG ; R.-Q. PENG ; X.-W. ZHANG.** Electrodeposition of hierarchical Ag nanostructures on ITO glass for reproducible and sensitive SERS application. *Appl. Surf. Sci.,* June 2012, vol. 258 (17), 6632-6636
- **S. E. LYSHEVSKI.** Nano- and Micro-Electromechanical Systems. CRC Press, January 2005
- **E. ROZNIECKA ; M. JONSSON-NIEDZIOLKA ; A. CELEBANSKA ; J. NIEDZIOLKA-JONSSON ; M. OPALLO.** Selective electrochemical detection of dopamine in a microfluidic channel on carbon nanoparticulate electrodes. *Analyst,* 2014, vol. 139, 2896-2903
- **K. L. NORROD ; K. L. ROWLEN.** Removal of carbonaceous contamination from SERS-active silver by self-assembly of decanethiol. *Anal. Chem.,* 1998, vol. 70, 4218-4221
- **J. V. GOSHU ; YU. V. TSAREV ; V. V. KOSTROV.** Sewage treatment for chromium(VI) disposal by combined reduction with sodium sulfite in the presence of solid adsorbents. *Catalysis in Industry,* 2010, vol. 2 (2), 126-130